# EUROPEAN PATENT APPLICATION

(11) **EP 4 421 195 A1**
(43) Date of publication of application: **28.08.2024**
(21) Application number: 22883160.8
(22) Date of filing: 16.06.2022
(51) Int. Cl.: C22C 19/00, B22F 1/00, B22F 1/142

(54) **HYDROGEN STORAGE ALLOY**

(30) Priority: 22.10.2021 JP 2021173471
(71) Applicant: Mitsui Mining & Smelting Co., Ltd., Shinagawa-ku Tokyo 141-8584 (JP)
(72) Inventor: YAMAGUCHI, Kyohei, Takehara-shi, Hiroshima 725-0025 (JP); SAWAMOTO, Hiroki, Takehara-shi, Hiroshima 725-0025 (JP); KIKUGAWA, Shingo, Takehara-shi, Hiroshima 725-0025 (JP); OKUZONO, Makoto, Takehara-shi, Hiroshima 725-0025 (JP); TORIMOTO, Masayasu, Takehara-shi, Hiroshima 725-0025 (JP)
(74) Representative: Novagraaf Technologies
(86) International application number: PCT/JP2022/024215
(87) International publication number: WO 2023/067848

(57) **Abstract**

A hydrogen storage alloy contains Mm, Ni, Mn, Al, and Co and has a main phase having a CaCu₅-type crystal structure. La and Ce together account for 95 mass% or more of Mm. When the mole ratios of Ni, Mn, Al, and Co with respect to 1 mol of Mm are represented by a, b, c, and d, respectively, d is 0.00 or more and less than 0.15, d/b is 0.00 or more and 0.35 or less, and the sum of a+b+c+d is 5.22 or more and 5.44 or less. The ratio H/E of hardness H (GPa) to composite elastic modulus E (GPa) as measured using a nanoindentation technique is 0.08 or more and 0.15 or less.

## Description

### Technical Field

The present invention relates to a hydrogen storage alloy.

### Background Art

ABs-type hydrogen storage alloys having a CaCus-type crystal structure, for example, alloys using Mm (misch metal), which is a mixture of rare earth elements, in the A site and elements such as Ni, Al, Mn, and Co in the B site (hereinafter, alloys of this type are referred to as "Mm-Ni-Mn-Al-Co alloys") have features of enabling a negative electrode to be made relatively inexpensively when compared with alloys having other compositions and, furthermore, enabling a sealed nickel-metal halide battery that has a long cycle life and in which the increase in internal pressure due to gases being generated in case of overcharging is reduced to be made, and other features.

Among the constituent elements of the Mm-Ni-Mn-Al-Co alloys, Co is an important element that suppresses pulverization of the alloys and is effective in improving life characteristics. However, since Co is a very expensive metal, it is desired to reduce the amount of Co used. In view of this, Patent Literature 1 proposes, in relation to a method for producing a hydrogen storage alloy in which the amount of Co used is small, a hydrogen storage alloy represented by the general formula MmNiₐMn_{b}Al_{c}Co_{d}, where Mm represents a misch metal, 4.0 ≤ a ≤ 4.7, 0.3 ≤ b ≤ 0.65, 0.2 ≤ c ≤ 0.5, 0 < d ≤ 0.35, and 5.2 ≤ a+b+c+d ≤ 5.5, and having a CaCu₅-type crystal structure.

Patent Literature 2 proposes a hydrogen storage alloy with a main phase having an ABs-type crystal structure, wherein the A site is constituted by a rare earth element containing La and the B site does not contain Co but contains Ni, Al, and Mn, with the ratio, Mn/AI, of the mole ratio of Mn to the mole ratio of Al being 0.60 or more and less than 1.56 and the ratio, La/(Mn+AI), of the mole ratio of La to the sum of the mole ratio of Al and the mole ratio of Mn being more than 0.92.

### Citation List

### Patent Literature

Patent Literature 1: US 2006/188385A1
Patent Literature 2: US 2019/348671A1

### Summary of Invention

However, when the amount of Co used in hydrogen storage alloys having a CaCus-type crystal structure is reduced, while battery life characteristics tend to be degraded, output characteristics are improved. Therefore, there is a need to reduce the amount of Co used while maintaining the output characteristics and the life characteristics. It is an object of the present invention to provide a hydrogen storage alloy that can overcome the various drawbacks of the above-described conventional techniques.
(1) The present invention provides a hydrogen storage alloy comprising Mm (Mm represents a misch metal), Ni, Mn, Al, and Co and having a main phase that has a CaCus-type crystal structure,
   wherein La and Ce together account for 95 mass% or more of Mm,
   d is 0.00 or more and less than 0.15,
   d/b is 0.00 or more and 0.35 or less, and
   a sum of a+b+c+d is 5.22 or more and 5.44 or less, and
   a ratio H/E of hardness H (GPa) to composite elastic modulus E (GPa) as measured using a nanoindentation technique is 0.08 or more and 0.15 or less,
   wherein a represents a molar ratio of Ni with respect to 1 mol of Mm
   b represents a molar ratio of Mn with respect to 1 mol of Mm,
   c represents a molar ratio of Al with respect to 1 mol of Mm, and
   d represents a molar ratio of Co with respect to 1 mol of Mm.
(2) The present invention provides the hydrogen storage alloy as set forth in clause (1), wherein the hardness H is 1 GPa or more and 11 GPa or less.
(3) The present invention provides the hydrogen storage alloy as set forth in clause (1) or (2), wherein a ratio of c-axis length to a-axis length of the CaCus-type crystal structure is 0.8080 or more and 0.8110 or less.
(4) The present invention provides the hydrogen storage alloy as set forth in any one of clauses (1) to (3), wherein c/b is 0.30 or more and 0.85 or less.
(5) The present invention provides the hydrogen storage alloy as set forth in any one of clauses (1) to (4), wherein a ratio of an area of a segregated phase to an area of a cross section of the hydrogen storage alloy is 0.01% or more and 1.60% or less, the cross section of the hydrogen storage alloy being observed using a scanning electron microscope.

### Description of Embodiments

Hereinafter, the present invention will be described based on a preferred embodiment thereof.

A hydrogen storage alloy of the present invention has a main phase having a CaCus-type crystal structure that has a space group of International Table Number 191 (P6/mmm), that is, an AB₅-type crystal structure.

The hydrogen storage alloy of the present invention contains Mm (Mm represents a misch metal), Ni, Mn, Al, and Co as constituent elements. Preferably, in the hydrogen storage alloy, Mm constitutes the A site of the above-described ABx composition, and Ni, Mn, Al, and Co constitute the B site. Therefore, in a preferred embodiment of the hydrogen storage alloy, the hydrogen storage alloy is an ABs-type hydrogen storage alloy that can be represented by the general formula MmNiₐMn_{b}Al_{c}Co_{d}, for example. In this general formula, a, b, c, and d represent the mole ratios of Ni, Mn, Al, and Co, respectively, with respect to 1 mol of Mm.

Various rare earth metal elements are known as Mm, but in the present invention, it is preferable to use at least La and Ce as Mm, in terms of the output characteristics of the hydrogen storage alloy. In view of this, the total proportion of La and Ce in Mm is preferably 95 mass% or more, more preferably 96 mass% or more, and even more preferably 97 mass% or more. The total proportion of La and Ce in Mm may also be 100 mass%.

In terms of the life characteristics of the hydrogen storage alloy, the percentage content of Ce in Mm is preferably 13 mass% or more, more preferably 15 mass% or more, and even more preferably 16 mass% or more. On the other hand, in terms of the output characteristics of a battery in which the hydrogen storage alloy is used, the percentage content of Ce in Mm is preferably 24 mass% or less, more preferably 22 mass% or less, and even more preferably 21 mass% or less.

When a rare earth metal element other than La and Ce is contained in the hydrogen storage alloy as Mm, this rare earth metal element may be, for example, at least one element selected from the group consisting of Nd, Pr, and Sm.

Ni, Mn, Al, and Co, which are the metal elements other than Mm that constitute the hydrogen storage alloy, will now be described. First, with regard to Co, from the viewpoint of cost reduction, when the mole ratio of Mm is set to 1, the mole ratio of Co, that is, the mole ratio d of Co in the general formula above is preferably less than 0.15. The mole ratio d of Co is more preferably 0.14 or less, even more preferably 0.13 or less, yet even more preferably 0.125 or less, and yet even more preferably 0.12 or less. Although the mole ratio d of Co is most preferably 0 from the viewpoint of cost reduction, it is desirable that the hydrogen storage alloy contains some amount of Co in terms of the performance of the hydrogen storage alloy. In view of this, the mole ratio d of Co is preferably 0.01 or more, more preferably 0.025 or more, and even more preferably 0.05 or more. When the amount of Co contained in the hydrogen storage alloy is small, the life characteristics of the alloy tend to be degraded; however, in the present invention, by appropriately controlling the alloy composition and appropriately controlling the mechanical properties, which will be described later, of the alloy, it is possible to suppress the degradation of the life characteristics and enhance the output characteristics even when the amount of Co is small.

Research conducted by the inventors of the present invention revealed that the mole ratio d of Co relative to the mole ratio b of Mn affects the performance of the hydrogen storage alloy. More specifically, it is preferable that d/b, which is the value of the ratio of the mole ratio d of Co to the mole ratio b of Mn, is 0.35 or less, because this enables the hydrogen storage alloy to exhibit sufficient life characteristics and output characteristics, while reducing the amount of Co used. From the viewpoint of making this advantage more prominent, the value of d/b is more preferably 0.34 or less, and even more preferably 0.33 or less.

The value of d/b is most preferably 0 from the viewpoint of cost reduction, but it is desirable that the value of d/b is somewhat greater than 0, in terms of the performance of the hydrogen storage alloy. In view of this, the value of d/b is preferably 0.04 or more, more preferably 0.06 or more, and even more preferably 0.08 or more.

In the hydrogen storage alloy of the present invention, it is preferable that, when the mole ratio of Mm constituting the A site of the ABx composition is set to 1, the total mole ratio of the elements constituting the B site (i.e., the sum of a+b+c+d given in the general formula above) is 5.22 or more, because this can suppress excessive cracking of the hydrogen storage alloy caused by repeated hydrogen absorption and desorption. From the viewpoint of making this advantage more prominent, the value of the sum of a+b+c+d is more preferably 5.24 or more, and even more preferably 5.26 or more. On the other hand, in terms of the output characteristics of a battery in which the hydrogen storage alloy is used as an electrode material of the battery, it is preferable that the value of the sum of a+b+c+d is 5.44 or less. From the viewpoint of making this advantage more prominent, the value of the sum of a+b+c+d is more preferably 5.42 or less, and even more preferably 5.40 or less.

In order to prevent degradation of the life characteristics of a nickel-metal halide battery in which the hydrogen storage alloy of the present invention is used as a negative electrode active material, one of the solutions is to suppress corrosion of the hydrogen storage alloy that may occur when the hydrogen storage alloy comes into contact with an aqueous alkaline solution serving as an electrolyte solution. Research conducted by the inventors of the present invention revealed that, with respect to a hydrogen storage alloy in which the Co content is sufficiently low and Mm that contains La and Ce is used, adjusting the ratio (c/b) of the mole ratio c of Al to the mole ratio b of Mn so that this ratio is within a predetermined range is advantageous for this purpose. From this viewpoint, in the hydrogen storage alloy of the present invention, the value of c/b is preferably 0.30 or more, more preferably 0.31 or more, even more preferably 0.32 or more, yet even more preferably 0.33 or more, and yet even more preferably 0.34 or more. In addition, the value of c/b is preferably 0.85 or less, more preferably 0.845 or less, even more preferably 0.840 or less, and yet even more preferably 0.835 or less.

From the viewpoint of achieving the object of the present invention, there are no particular limitations on the respective mole ratios a, and b of Ni, Mn, and Al in the hydrogen storage alloy of the present invention. However, with consideration given to using the hydrogen storage alloy of the present invention as a negative electrode active material of a Ni-MH battery to be installed in EVs and HEVs, the following is conceivable.

With regard to Ni, when the mole ratio of Mm, which constitutes the A site of the ABx composition, is set to 1, the mole ratio a of Ni is preferably 4.20 or more and 4.80 or less, more preferably 4.30 or more or 4.70 or less, and even more preferably 4.35 or more or 4.60 or less.

The mole ratio b of Mn is preferably 0.30 or more and 0.66 or less, more preferably 0.34 or more or 0.64 or less, and even more preferably 0.38 or more or 0.62 or less.

The mole ratio c of Al is preferably 0.15 or more and 0.40 or less, more preferably 0.17 or more or 0.39 or less, and even more preferably 0.19 or more or 0.38 or less.

It is permissible that the hydrogen storage alloy of the present invention contains impurities to the extent that does not affect the effects of the present invention. For example, any one or more of the elements Fe, Cu, Ti, Mo, W, Si, Ca, Pb, Cd, Mg, and Zr may be contained in a respective amount of about 0.05 mass% or less.

The amounts of the elements contained in the hydrogen storage alloy of the present invention and the composition ratios of those elements can be obtained through chemical component analysis and measurement. Note that, when the hydrogen storage alloy of the present invention is used as a negative electrode active material of a Ni-MH battery to be installed in EVs and HEVs, there are cases where the mole ratios of Al and Mn change slightly during the battery production process or in the course of use of the battery, but research conducted by the inventors of the present invention showed that the amount of such a change is within about 0.03 in terms of mole ratio. Therefore, if the negative electrode active material is collected from the used Ni-MH battery and analyzed, the mole ratios of the elements constituting the hydrogen storage alloy before being used in the battery can be estimated.

Research conducted by the inventors of the present invention revealed that a good balance between the life characteristics and the output characteristics of the hydrogen storage alloy of the present invention can be achieved by adjusting the mechanical properties of the hydrogen storage alloy. Specifically, it is preferable to set the value of the ratio H/E of hardness H (GPa) to composite elastic modulus E (GPa) of the hydrogen storage alloy as measured using a nanoindentation technique to 0.08 or more and 0.15 or less. The value of H/E is an amount proportional to the yield strain, and, as mechanical properties of a material, whether or not the material is susceptible to scratching can be judged based on this value. Susceptibility to scratching is considered to indicate susceptibility to brittle fracture and therefore indicate that the material is brittle. For this reason, it is presumed that, in the case of a hydrogen storage alloy, the value of H/E serves as an indicator of the likelihood of the hydrogen storage alloy cracking when repeatedly performing hydrogen absorption and desorption. It is considered that, with this value being set within the above-described range, when a hydrogen storage alloy repeatedly performs hydrogen absorption and desorption, the hydrogen storage alloy cracks to such an extent that the life characteristics thereof can be maintained, and such cracking makes it possible to improve the output characteristics. In consideration of this, the value of H/E is more preferably 0.08 or more and 0.148 or less, even more preferably 0.08 or more and 0.146 or less, and yet even more preferably 0.08 or more and 0.14 or less.

To set the value of H/E to be within the above-described range, for example, the hydrogen storage alloy can be produced according to a production method described later. Methods for measuring the composite elastic modulus E and the hardness H will be described in Examples later.

While the value of H/E is preferably within the above-described range, the value of the composite elastic modulus E is preferably 4.0 GPa or more and 138.5 GPa or less, more preferably 4.1 GPa or more and 138.0 GPa or less, even more preferably 4.2 GPa or more and 137.5 GPa or less, and yet even more preferably 35 GPa or more and 137.0 GPa or less, because this makes it even easier to achieve a good balance between the life characteristics and the output characteristics.

From the same viewpoint, the value of the hardness H is preferably 1.0 GPa or more and 11.0 GPa or less, more preferably 1.1 GPa or more and 11.0 GPa or less, even more preferably 1.2 GPa or more and 10.98 GPa or less, and yet even more preferably 4.0 GPa or more and 10.96 GPa or less.

As described above, it is preferable that the hydrogen storage alloy of the present invention is controlled so as to crack to a moderate extent when repeatedly performing hydrogen absorption and desorption. To this end, it is preferable to control the crystal structure of the hydrogen storage alloy so that the hydrogen storage alloy can withstand changes in volume caused by hydrogen absorption and desorption. From this viewpoint, the ratio of the c-axis length to the a-axis length of the CaCus-type crystal structure of the hydrogen storage alloy of the present invention is preferably 0.8080 or more, more preferably 0.8084 or more, and even more preferably 0.8088 or more. In addition, the ratio of the c-axis length to the a-axis length is preferably 0.8110 or less, more preferably 0.8109 or less, and even more preferably 0.8107 or less.

While the ratio of the c-axis length to the a-axis length is as described above, the value of the a-axis length itself is preferably 5.0146 Å or more and 5.0207 Å or less, more preferably 5.0152 Å or more and 5.0201 Å or less, and even more preferably 5.0158 Å or more and 5.0195 Å or less, on condition that the value of c-axis length/a-axis length is within the above-described range.

On the other hand, the value of the c-axis length itself is preferably 4.0597 Å or more and 4.0700 Å or less, more preferably 4.0603 Å or more and 4.0694 Å or less, and even more preferably 4.0609 Å or more and 4.0683 Å or less, on condition that the value of c-axis length/a-axis length is within the above-described range.

Examples of the method for adjusting the ratio of the c-axis length to the a-axis length of the hydrogen storage alloy of the present invention include: changing the composition ratios of the alloy; changing the cooling means and cooling conditions after casting; changing the heat treatment conditions; and other methods. However, the present invention is not limited to these methods.

In the present invention, the a-axis length and the c-axis length of the hydrogen storage alloy can be obtained through powder X-ray diffraction measurement. In this case, with respect to the particle size of a powder for use in powder X-ray diffraction measurement, a sifted powder of -500 µm is further sifted through a sieve with an opening size of 20 µm, and the undersize product, that is, a powder of -20 µm is used as a measurement sample. Note that if the amount of measurement sample obtained through the above-described sifting process alone is insufficient, the powder of -500 µm may be comminuted to obtain a powder of -20 µm, in order to obtain the required amount of powder for the measurement. When performing comminution, the comminution needs to be performed under conditions that will not change the crystal structure of the hydrogen storage alloy. Therefore, it is preferable to check the comminution conditions by measuring the a-axis length, the c-a-axis length, and the lattice volume under the conditions with comminution and under the conditions without comminution, comparing the results of measurements under the two different conditions, and confirming that the measurement results are equivalent. The a-axis length and the c-axis length are determined through X-ray diffraction measurement, as will be described in Example later. For the analysis, Fundamental Parameter is employed, and values are obtained according to the Pawley method, as will be described in Examples later.

In addition to the above-described adjustment of the mechanical properties of the hydrogen storage alloy, it was also found that if a slight amount of segregated phase is observed in the hydrogen storage alloy, the hydrogen storage alloy has sufficient life characteristics and output characteristics in a more well-balanced manner. The term "segregated phase" refers to a phase that forms in the process of producing the hydrogen storage alloy of the present invention, and is different from the CaCus-type crystal structure, which is the main phase. The composition of the segregated phase, which is a different phase, is not always clear, but the inventors of the present invention consider that it is composed mainly of Mn and Al and contains Ni and Co in addition to the main components. Also, the segregated phase does not have hydrogen storage ability. The presence or absence of a segregated phase can be checked by observing a cross section of the hydrogen storage alloy of the present invention using a scanning electron microscope backscattered electron (hereinafter referred to as "SEM-BSE") image. If a segregated phase is present, the segregated phase is observed with a different contrast in the SEM-BSE image, and therefore the presence or absence of the segregated phase can be easily judged.

Since the segregated phase does not have hydrogen storage ability as described above, when the hydrogen storage alloy performs hydrogen absorption and desorption, no changes in volume caused by the absorption and desorption of hydrogen occur in the segregated phase. Thus, the segregated phase tends to be a starting point for cracking of the hydrogen storage alloy caused by repeated hydrogen absorption and desorption. Cracking should be avoided in terms of the life characteristics of the hydrogen storage alloy, and, in consideration of this, it is desirable that there is no segregated phase in the hydrogen storage alloy.

On the other hand, cracking of the hydrogen storage alloy leads to an increase in the surface area of the hydrogen storage alloy. An increase in the surface area of the hydrogen storage alloy means that the hydrogen storage alloy has more opportunities for coming into contact with an electrolyte solution in a battery in which the hydrogen storage alloy is used as an electrode material, or in other words, the output characteristics of the battery are improved. In consideration of this, it is desirable to have a segregated phase in the hydrogen storage alloy to cause cracking in the hydrogen storage alloy. However, an excessive increase in the surface area of the hydrogen storage alloy would accelerate the progress of corrosion of the hydrogen storage alloy and therefore should be avoided in terms of the battery life characteristics.

In consideration of the above-described advantages and disadvantages, in the present invention, the degradation of the life characteristics caused by reducing the amount of Co used is compensated for by adjusting the mechanical properties of the hydrogen storage alloy as described above and also by controlling a segregated phase that may be present in the hydrogen storage alloy, and thus, an even better balance between the life characteristics and the output characteristics is achieved.

Therefore, in the hydrogen storage alloy of the present invention, when a cross section of the hydrogen storage alloy is observed in an SEM-BSE image, the ratio of the area of a segregated phase to the area of the cross section (hereinafter, this ratio is also be referred to as "segregated phase percentage") is preferably set to 0.01% or more and 1.60% or less, more preferably 0.10% or more and 1.40% or less, even more preferably 0.20% or more and 1.20% or less, and yet even more preferably 0.20% or more and 1.10% or less.

To set the segregated phase percentage of the hydrogen storage alloy to be within the above-described range, for example, the hydrogen storage alloy can be produced according to the production method described later. A method for measuring the segregated phase percentage will be described in Examples later.

Next, a preferred method for producing the hydrogen storage alloy of the present invention will be described.

In the present production method, hydrogen storage alloy raw materials are weighed and mixed, with the ratios of various elements being adjusted so as to obtain a predetermined alloy composition, the raw materials are then melted using an induction-heating high-frequency melting furnace, for example, to form a molten metal, a block of alloy is obtained from the molten metal, and the block of alloy is comminuted. Thus, a hydrogen storage alloy powder is obtained.

When melting the hydrogen storage alloy raw materials to form a molten metal, the temperature of the molten metal is preferably 1300°C to 1600°C, more preferably 1350°C or more or 1590°C or less, and even more preferably 1400°C or more or 1580°C or less.

Next, the molten metal is cooled to obtain a block of alloy. For example, the molten metal can be poured into a mold to obtain a block of alloy. A water-cooled mold, for example, can be used as the mold. Cooling of the molten metal by pouring the molten metal into a water-cooled mold proceeds relatively slowly, and therefore the resulting block of alloy contains areas where the crystallinity of the alloy, such as crystal strain, crystal grain size, axial length, and lattice volume, for example, is not uniform. In order to appropriately control the areas where the crystallinity is not uniform to thereby control the mechanical properties of the alloy, the obtained block of alloy is preferably subjected to a first heat treatment before being comminuted. Some of the non-uniform areas that are present in the block of alloy can be homogenized by subjecting the block of alloy to the heat treatment. To this end, the heat treatment is preferably performed under vacuum or in an inert gas atmosphere. There is no particular limitation on the inert gas, and argon, neon, helium, nitrogen, or the like can be used. The temperature and time of the heat treatment can be set appropriately so that the areas of non-uniform crystallinity that are present in the block of alloy can be moderately homogenized. Research conducted by the inventors of the present invention revealed that satisfactory results can be obtained by performing the heat treatment at a temperature of preferably 900°C or more and 1098°C or less, more preferably 1000°C or more and 1096°C or less, and even more preferably 1050°C or more and 1095°C or less, for a period of 1 hour or longer and 10 hours or shorter, more preferably 2 hours or longer and 8 hours or shorter, and even more preferably 2 hours or longer and 6 hours or shorter.

The block of alloy in which some of the areas of non-uniform crystallinity of the alloy have been homogenized through the first heat treatment is then subjected to a comminution step, and as a result, a powder is obtained. With regard to the extent of comminution, for example, it is preferable to comminute the block of alloy to a particle size (-500 µm) capable of passing through 500-µm sieve openings. However, the comminution may be performed to a particle size (-1000 µm) capable of passing through 1000-µm sieve openings or a particle size (-850 µm) capable of passing through 850-µm sieve openings. Excessive comminution at this stage may lower the magnetic separation efficiency, and therefore, when performing comminution, it is preferable that the comminution is performed to such an extent that the resulting powder contains particles remaining on a sieve with an opening size of 150 µm and having a particle size of +150 µm in an amount of 50 mass% or more.

Preferably, the thus obtained powder is subjected to a second heat treatment. The purpose of this heat treatment is to further homogenize the areas of non-uniform crystallinity of the alloy that are still present in the alloy, thereby accurately controlling the mechanical properties of the alloy within the desired ranges. The above-described block of alloy contains a relatively large amount of areas where the crystallinity of the alloy is not uniform, and therefore it is not easy to accurately control the mechanical properties of the alloy within the desired ranges by simply performing the first heat treatment on the block of alloy. For this reason, in the present production method, heat treatment is performed in two separate steps, to thereby homogenize the above-described areas of non-uniform crystallinity in a stepwise manner and accurately control the mechanical properties of the alloy within the desired ranges.

The atmosphere of the second heat treatment may be the same as that of the first heat treatment. The temperature and time of the heat treatment can be set appropriately so that the mechanical properties of the alloy are within the desired ranges. Research conducted by the inventors of the present invention revealed that satisfactory results can be obtained by performing the heat treatment at a temperature of preferably 900°C or more and 1098°C or less, more preferably 1000°C or more and 1096°C or less, and even more preferably 1050°C or more and 1095°C or less, for a period of 1 hour or longer and 10 hours or shorter, more preferably 2 hours or longer and 8 hours or shorter, and even more preferably 2 hours or longer and 6 hours or shorter.

In the above-described manner, an alloy powder having the desired mechanical properties is obtained. This alloy powder is disintegrated and sifted as necessary, and thus, a powder of the hydrogen storage alloy of the present invention is obtained.

In the above-described production method, the molten metal of the hydrogen storage alloy is poured into a water-cooled mold to obtain a block of alloy, but instead, an operation of supplying the molten metal onto a circumferential surface of a rotating water-cooled roll to obtain a thin strip may be performed. The rotation speed of the roll is preferably 50 to 200 rpm, more preferably 55 rpm or more or 190 rpm or less, and even more preferably 60 rpm or more or 180 rpm or less, in terms of the cooling speed of the molten metal and the thickness of the resulting thin strip.

Cooling using a water-cooled roll cools the molten metal faster than cooling using a water-cooled mold. This means that the alloy after cooling contains a smaller amount of areas where the crystallinity of the alloy is not uniform. Therefore, when cooling the molten metal using the above-described water-cooled mold, it is necessary to perform two separate heat treatments on the alloy, whereas when cooling the molten metal using the water-cooled roll, it is sufficient to perform a single heat treatment on the alloy. Accordingly, when cooling the molten metal using the water-cooled roll, it is sufficient that the thin strip obtained as a result of cooling is subjected to heat treatment to reduce the areas of non-uniform crystallinity that are present in the alloy and thereby adjust the mechanical properties of the alloy so that the mechanical properties are within the desired ranges, and therefore, the powder obtained by subjecting the heat-treated thin strip to the comminution step does not need to be subjected to another heat treatment.

The heat treatment is preferably performed under vacuum or in an inert gas atmosphere. There is no particular limitation on the inert gas, and argon, neon, helium, nitrogen, or the like can be used. The temperature and time of the heat treatment can be set appropriately so that the mechanical properties of the alloy are within the desired ranges. Research conducted by the inventors of the present invention revealed that satisfactory results can be obtained by performing the heat treatment at a temperature of preferably 900°C or more and 1098°C or less, more preferably 1000°C or more and 1096°C or less, and even more preferably 1050°C or more and 1095°C or less, for a period of 1 hour or longer and 10 hours or shorter, more preferably 2 hours or longer and 8 hours or shorter, and even more preferably 2 hours or longer and 6 hours or shorter.

After the heat-treated thin strip is subjected to the above-described comminution step, the desired hydrogen storage alloy powder is obtained without the need to perform another heat treatment.

The thus obtained hydrogen storage alloy powder is suitably used as a negative electrode material of a battery, for example. In this case, it is preferable to subject the hydrogen storage alloy powder to magnetic separation as necessary. Impurities that may cause a short circuit of a battery can be removed by performing magnetic separation. After performing the magnetic separation as necessary, it is possible to prepare a battery negative electrode using a known method, for example. Specifically, a negative electrode made of the hydrogen storage alloy can be obtained by mixing the hydrogen storage alloy powder with a binding agent, a conductivity aid, and the like using a known method and molding the mixture into a predetermined shape.

The thus obtained negative electrode made of the hydrogen storage alloy can be used for not only secondary batteries but also primary batteries (including fuel cells). For example, a Ni-MH battery can be composed of the negative electrode made of the hydrogen storage alloy, a positive electrode using nickel hydroxide as an active material, an electrolyte solution containing an aqueous alkaline solution, and a separator. In particular, the hydrogen storage alloy of the present invention can have sufficient life characteristics and output characteristics while reducing the amount of Co used, and therefore the Ni-MH battery can be particularly suitably used for installation in EVs, HEVs, and the like that require such characteristics.

### Examples

Hereinafter, the present invention will be described in further detail by way of examples. However, the scope of the present invention is not limited to the examples below.

### Examples 1 to 5

Raw materials were weighed and mixed to obtain a mixture so that the percentages by mass of respective elements were as shown in Table 1 below. Note that, substantially, monometals La and Ce were used as Mm.

The obtained mixture was placed in a crucible, the crucible was fixed in a high-frequency melting furnace, and the pressure in the furnace was reduced to 10⁻⁴ to 10⁻⁵ Torr. Then, argon gas was introduced, and the mixture was heated to 1450°C in an argon gas atmosphere to obtain a molten metal.

The molten metal was poured into a water-cooled copper mold and cooled to obtain a block of alloy. The obtained block of alloy was placed in a stainless steel container, the container was set in a vacuum heat treatment apparatus, and the block of alloy was subjected to the first heat treatment in an argon gas atmosphere. The heat treatment was performed at a temperature of 1078°C for 4 hours and 45 minutes.

The heat-treated block of alloy was comminuted in an argon gas atmosphere using a jaw crusher (manufactured by Fuji Paudal Co., Ltd., model: 1021-B) and a Brown mill (manufactured by Yoshida Seisakusho Co., Ltd., model: 1025-HBG). The comminution was performed to a particle size (-500 µm) capable of passing through 500-µm sieve openings.

The thus obtained alloy powder was placed in a stainless steel container, the container was set in a vacuum heat treatment apparatus, and the alloy powder was subjected to the second heat treatment in an argon gas atmosphere. The heat treatment was performed at a temperature of 1078°C for 4 hours and 45 minutes.

The heat-treated alloy powder was disintegrated and passed through a sieve with an opening size of 500 µm. In this manner, a hydrogen storage alloy powder of each example was obtained.

### Example 6

Raw materials were weighed and mixed to obtain a mixture so that the percentages by mass of respective elements were as shown in Table 1 below. Note that, substantially, monometals La and Ce were used as Mm.

The obtained mixture was placed in a crucible, the crucible was fixed in a high-frequency melting furnace, and the pressure in the furnace was reduced to 10⁻⁴ to 10⁻⁵ Torr. Then, argon gas was introduced, and the mixture was heated to 1500°C in an argon gas atmosphere to obtain a molten metal.

The molten metal was cooled by casting the molten metal onto a rotating water-cooled copper roll, to obtain a hydrogen storage alloy in the form of a thin strip.

The obtained thin strip was placed in a stainless steel container, the container was set in a vacuum heat treatment apparatus, and the thin strip was subjected to heat treatment in an argon gas atmosphere. The heat treatment was performed at a temperature of 1078°C for 4 hours and 45 minutes.

The heat-treated thin strip was comminuted in an argon gas atmosphere using a Brown mill (manufactured by Yoshida Seisakusho Co., Ltd., model:1025-HBG). The comminution was performed to a particle size (-500 µm) capable of passing through 500-µm sieve openings. Thus, a hydrogen storage alloy powder of the present example was obtained.

### Examples 7 to 9

Raw materials were weighed and mixed to obtain a mixture so that the percentages by mass of respective elements were as shown in Table 1 below. Otherwise, the same procedures as those of Example 1 were performed. Thus, a hydrogen storage alloy powder of each example was obtained.

### Example 10

Raw materials were weighed and mixed to obtain a mixture so that the percentages by mass of respective elements were as shown in Table 1 below. Otherwise, the same procedures as those of Example 6 were performed. Thus, a hydrogen storage alloy powder of each example was obtained.

### Comparative Examples 1 to 5

Raw materials were weighed and mixed to obtain a mixture so that the percentages by mass of respective elements were as shown in Table 1 below. Note that, substantially, monometals La and Ce were used as Mm.

The obtained mixture was placed in a crucible, the crucible was fixed in a high-frequency melting furnace, and the pressure in the furnace was reduced to 10⁻⁴ to 10⁻⁵ Torr. Then, argon gas was introduced, and the mixture was heated to 1450°C in an argon gas atmosphere to obtain a molten metal.

The molten metal was poured into a water-cooled copper mold and cooled to obtain a block of alloy. The obtained block of alloy was placed in a stainless steel container, the container was set in a vacuum heat treatment apparatus, and the block of alloy was subjected to heat treatment in an argon gas atmosphere. The heat treatment was performed at a temperature of 1078°C for 4 hours and 45 minutes.

The heat-treated block of alloy was comminuted in an argon gas atmosphere using a jaw crusher (Fuji Paudal Co., Ltd., model: 1021-B) and a Brown mill (manufactured by Yoshida Seisakusho Co., Ltd., model:1025-HBG). The comminution was performed to a particle size (-500 µm) capable of passing through 500-µm sieve openings. Thus, a hydrogen storage alloy powder of each comparative example was obtained.

### Evaluation

For Examples 1 to 10 and Comparative Examples 1 to 5, the composite elastic modulus E and the hardness H were measured. Also, for the hydrogen storage alloy powders obtained in the examples and the comparative examples, the a-axis length, the c-axis length, and the segregated phase percentage were measured using methods described below. Table 2 below shows the results. Furthermore, for the hydrogen storage alloy powders obtained in the examples and the comparative examples, the pulverization residual rate index, the amount of increase in specific surface area ΔCS, and the magnetization after alkaline treatment were measured using methods described below. Table 3 below shows the results.

### Composite Elastic Modulus E, Hardness H, and H/E

The alloy powder of each of the examples and the comparative examples was embedded in resin and then mirror-polished to expose precise cross sections of respective particles. Next, measurements were performed using an SEM-Indenter system (manufactured by Femto Tools, model: FT-NMT04). The SEM mounted was SUPRA 55VP (manufactured by Carl Zeiss), and the sensor used was FT S200000 (diamond indenter, Berkovich (65.3°)). The measurement conditions were as follows.
- Measurement mode: Indentation CSM (Frequency = 200 MHz)
- Indentation load: up to 200000 µN
- Indentation displacement: as desired
- Number of measurement points: at least 5 points (effective)/particle, 3 particles per sample, Measurement interval: 15 µ (4 × 4 points = 16 points)
- Hardness calibration: fused silica (Reduced Modulus: 69.6 GPa)

Note that measurement points at which abnormal behavior was observed in a stress-strain curve due to particle cracking or abnormal surface shapes (e.g., polishing scratches, foreign matter, etc.) during the measurements were excluded from the measurement data and were not referenced.

Average values of the data obtained by the measurements were calculated and used as the values of H and E, respectively. In addition, the value of H/E was calculated by dividing H by E.

### Segregated Phase Percentage

The hydrogen storage alloy powder was placed in an acrylic cylindrical ring, and epoxy resin was then poured into the ring and allowed to stand for twenty-four hours to solidify. The solidified product was cut to a suitable height, and surface polishing was then performed using a polishing machine (manufactured by Struers, model: S5629, Laboforce-3) to make a cross section of the alloy visible on the resin. Next, the surface-polished product was set in an ion sputtering apparatus (model: IB-3, manufactured by EIKO Corporation), with the cross section of the alloy facing upward, gold evaporation was performed, and thus, a sample for SEM measurement was obtained.

The obtained sample was set in a scanning electron microscope (model: SU8220, manufactured by Hitachi High-Tech Corporation), and the cross section of the alloy was observed under the following conditions. Note that a semiconductor-type backscattered electron detector attached to this equipment was used together, and the cross section of the alloy was observed using an SEM-BSE image.

### Observation Conditions

Detector: BSE (PD)
Sample height (z): 8.0
Acceleration voltage: 10.0 kV
Probe current: High
Number of particles observed: 100
Observation magnification: as desired (A magnification at which the entirety of each particle can be seen is selected as desired.)

Next, a captured image was analyzed using a piece of image-analyzing particle size distribution analysis software (manufactured by Mountech Co., Ltd., model: Mac-View version 4). The procedure of the analysis is shown below.

### Analysis Procedure

- Trace the entire circumferences of particles in the captured image with a stylus and confirm the traced lines.
- If there is any segregated phases, trace the circumferences of the segregated phases with a stylus and confirm the traced lines.
- Specify the scale by referring to the scale in the SEM image.
- Upon completion of the above operation, confirm the input data, and then the total areas of the individual particles and the areas of the segregated phases, if any, are calculated.

Next, the segregated phase percentage was calculated using the areas of the individual particles, and of the segregated phases, if any, analyzed according to the above-described method. Segregated phase percentage = (sum of segregated phase areas)/(sum of particle total areas) × 100

### a-Axis Length and c-Axis Length

The hydrogen storage alloy powder was classified using a sieve with an opening size of 20 µm to obtain a measurement sample of -20 µm (particles capable of passing through the 20-µm sieve openings). The obtained measurement sample was filled in a sample holder, and measurements were performed using an X-ray diffractometer (manufactured by Bruker AXS, D8 ADVANCE) to obtain the a-axis length, the c-axis length, and the lattice volume. The measurements were repeated n = 3 times for the similarly prepared hydrogen storage alloy powder, and the average values were obtained. The specifications of the X-ray diffractometer used, the conditions, and the like are as follows.
Apparatus Specifications
   Tube: CuKα radiation

- Incident beam path
   [Tube mount]
      Voltage: 40 [kV]
      Current: 40 [mA]
      Element: Cu
   [Optics_Primary_Mortorized Slit]
      Opening: 0.30 [°]
   [Slit Mount]
      No Slit 10.5 [mm] 10.5 [mm]
      Width: 18 [mm]
   Height: 10.5 [mm]
      Deflection: 0 [°]
   [Soller Mount]
      Axial Soller 2.5 [°] 2.5 [°]
      Axial Divergence: 2.5 [°]
      Equatoril Divergence: 0 [°]
      Deflection: 0 [°]
- Light-receiving-side bean path
   Detector: LYNXEYE XE
   [LYNXEYE_XE]
      Mode: LYNXEYE_XE (1D mode)
      Deflection: 0 [°]
      Activaton Limit: 200000 [1/s]
      Deactivaton Limit: 150000 [1/s]
      Lower Discriminator: 0.212 [V]
      Bining: 1 Counter 1D: 0 [counts]
      Scan Counter: 0 [counts]
      Counter 0D: 0 [counts]
      Upper Discriminator: 0.230 [V]
      Orientation: 0 [°]
   [Detector Optics Mount 2]
      Soller_25 2.5 [°] 2.5 [°]
      Axial Divergence: 2.5 [°]
      Equatoril Divergence: 0 [°]
      Deflection: 0 [°]
   [Detector Optics Mount 1]
      Slit_Open_1 0 [mm] 0 [mm]
      Width: 14 [mm]
      Height: 0 [mm]
      Deflection: 0 [°]
   [Soller Mount]
      Deflection: 0 [°]
   [Slit Mount]
      No Slit 10.5 [mm] 10.5 [mm]
      Width: 18 [mm]
      Height: 10.5 [mm]
      Deflection: 0 [°]

### Measurement Conditions

Measurement mode: Two Theta/Theta
Mode: PSD high speed scanning
Time/step: 0.280 [s]
Start: 20.0000 [°]
Stop: 120.0046 [°]
Step width: 0.007175469952

X-ray diffraction patterns (in the range of diffraction angle 2θ = 20° to 120°) obtained by the measurements were analyzed using a piece of analysis software (software name: Topas Version 5).

For the analysis, Fundamental Parameter was employed, Spacegroup: P6/mmm was selected, and refinement was performed according to the Pawley method, with the a-axis length, the c-axis length, and Crystalsize-L being set as variables.

X-ray diffraction pattern peaks used in the analysis are as follows.
- Peak located around 20.5° and indexed by Miller indices (010)
- Peak located around 21.9° and indexed by Miller indices (001)
- Peak located around 30.1° and indexed by Miller indices (011)
- Peak located around 35.8° and indexed by Miller indices (110)
- Peak located around 41.6° and indexed by Miller indices (020)
- Peak located around 42.4° and indexed by Miller indices (111)
- Peak located around 44.6° and indexed by Miller indices (002)
- Peak located around 47.5° and indexed by Miller indices (021)
- Peak located around 49.5° and indexed by Miller indices (012)
- Peak located around 56.1° and indexed by Miller indices (210)
- Peak located around 58.5° and indexed by Miller indices (112)
- Peak located around 60.9° and indexed by Miller indices (211)
- Peak located around 62.6° and indexed by Miller indices (022)
- Peak located around 64.4° and indexed by Miller indices (030)
- Peak located around 68.9° and indexed by Miller indices (031)
- Peak located around 69.4° and indexed by Miller indices (003)
- Peak located around 73.2° and indexed by Miller indices (013)
- Peak located around 74.3° and indexed by Miller indices (212)
- Peak located around 76.0° and indexed by Miller indices (220)
- Peak located around 79.7° and indexed by Miller indices (310)
- Peak located around 80.2° and indexed by Miller indices (221)
- Peak located around 80.7° and indexed by Miller indices (113)
- Peak located around 81.8° and indexed by Miller indices (032)
- Peak located around 83.9° and indexed by Miller indices (311)
- Peak located around 84.3° and indexed by Miller indices (023)
- Peak located around 90.6° and indexed by Miller indices (040)
- Peak located around 92.7° and indexed by Miller indices (222)
- Peak located around 94.7° and indexed by Miller indices (041)
- Peak located around 95.2° and indexed by Miller indices (213)
- Peak located around 96.3° and indexed by Miller indices (312)
- Peak located around 98.8° and indexed by Miller indices (004)
- Peak located around 101.5° and indexed by Miller indices (320)
- Peak located around 102.5° and indexed by Miller indices (014)
- Peak located around 102.6° and indexed by Miller indices (033)
- Peak located around 105.8° and indexed by Miller indices (321)
- Peak located around 107.4° and indexed by Miller indices (042)
- Peak located around 109.0° and indexed by Miller indices (410)
- Peak located around 110.0° and indexed by Miller indices (114)
- Peak located around 113.4° and indexed by Miller indices (411)
- Peak located around 113.9° and indexed by Miller indices (024)
- Peak located around 114.0° and indexed by Miller indices (223)
- Peak located around 118.0° and indexed by Miller indices (313)
- Peak located around 119.2° and indexed by Miller indices (322)

Pulverization Residual Index and Amount of Increase in Specific Surface Area ΔCS
20g of the hydrogen storage alloy powder was comminuted for 30 seconds using Cyclomill (manufactured by Yoshida Seisakusho Co., Ltd., model: 1033-200). With use of a sieve having 20-µm sieve openings and a sieve having 53-µm sieve openings, the comminuted powder was sifted between the two sieves to adjust the particle size to D₅₀ = 45 µm ± 0.5 µm. Thus, a measurement sample was obtained. At this time, the CS value (specific surface area, "pre-cycle CS value") was measured simultaneously with the D₅₀ value (pre-cycle D₅₀ value). The CS value is a specific surface area calculated from particle diameters that were measured assuming that the particles were spherical.

The D₅₀ value and the CS value were obtained as follows: measurement was performed under the following conditions using a particle size distribution measurement apparatus (Microtrac, manufactured by Nikkiso Co., Ltd., model: HRA 9320-X100), and the D₅₀ value and the CS value were obtained from a volume-based particle size distribution chart obtained through the measurement.
(Set Zero time): 30 sec
(Measurement time): 30 sec
(Number of times of measurement): 1 time
(Solvent and refractive index): water, 1.33
(Particle condition permeability): reflective
(Flow rate): 60 ml/sec

2 g of the obtained measurement sample was placed in a PCT holder, and the following activation treatment was performed using an activation apparatus.

Activation treatment: While the PCT holder was heated in a mantle heater (300°C), vacuum evacuation was performed for 1 hour, then, 1.75 MPa hydrogen was introduced, and after allowing to stand for 30 minutes, vacuum evacuation was performed. This series of operations were performed twice.

Next, the PCT holder was removed from the mantle heater, connected to a PCT measurement system (manufactured by Suzuki Shokan Co., Ltd.), placed in a thermostatic chamber at 45°C, and evacuated for 45 minutes. After that, PCT measurement was performed under the following conditions.
(Convergence time) 1 min
(Convergence differential pressure) 0.0001 MPa
(Convergence judgment time) 1 Min
(Absorption end pressure) 1.7 MPa
(Desorption end pressure) 0.01 MPa
(Number of cycles) 10 cycles

Upon completion of the 10-th cycle, the PCT holder was evacuated for 30 minutes, and then the sample was removed from the PCT holder to obtain a sample after 10 cycles.

The D₅₀ value (post-cycle D₅₀ value) and the CS value (post-cycle CS value) of the sample after 10 cycles were measured in the same manner as the D₅₀ values (pre-cycle D₅₀ values) and the CS values (pre-cycle CS values) of the powders obtained by comminuting the hydrogen storage alloys obtained in the examples and the comparative examples using the Cyclomill, and the pulverization residual rate and the amount of increase in specific surface area ΔCS were calculated using the equations below. Pulverization residual index = (post-cycle D50 value/pre-cycle D50 value) × 100 Amount of increase in specific surface area ΔCS = (post-cycle CS value - pre-cycle CS value

The pulverization residual rate indices shown in Table 3 are numerical values obtained as follows: with the pulverization residual rate of Example 1 that was measured using the above-described method being set to 100, the pulverization residual rates of Examples 2 to 10 and Comparative Examples 1 to 5 were indexed. A pulverization residual rate index serves as an indicator of the output characteristics of a battery, and the smaller the value thereof, the better the output characteristics.

### Magnetization after Alkaline Treatment

20 g of the hydrogen storage alloy powder was comminuted for 1 minute using Cyclomill (manufactured by Yoshida Seisakusho Co., Ltd., model: 1033-200), and classified with a sieve having an opening size of 32 µm to obtain a sample for treatment that had a particle size D₅₀ = 21 µm ± 2 µm. D₅₀ was measured as follows: measurement was performed under the following conditions using a particle size distribution measurement apparatus (Microtrac, manufactured by Nikkiso Co., Ltd., model: HRA 9320-X100), and D₅₀ was obtained from a volume-based particle size distribution chart obtained through the measurement.
(Set Zero time): 30 sec
(Measurement time): 30 sec
(Number of times of measurement): 1 time
(Solvent and refractive index): water, 1.33
(Particle condition permeability): reflective
(Flow rate): 60 ml/sec

3 g of the obtained sample for treatment was placed into 30 ml of a 31 mass% aqueous KOH solution at 120°C, and the mixture was shaken for 3 hours using a shaker to perform alkaline treatment. Then, the mixture was washed with water, filtered, and dried. Thus, a measurement sample was obtained.

With use of VSM (Vibration Sample Magnetometer: a sample vibration-type fluxmeter, manufactured by Tamakawa Co., Ltd., model: TM-VSM1014-MRO-M type, electromagnet: TM-WTF51.406-101.5FA type, sample holder: TM-VSMSH-21-3 type, sample container: TM-VSMPCA-C type), the hysteresis loop of the measurement sample was measured, and the magnetization was measured.

Note that, before the magnetization measurement, the instrument was calibrated by performing a calibration operation using a standard sample (Ni with purity of 99.998%) and was confirmed to be normal. After that, the above-described magnetization measurement was performed.

### Measurement Conditions of Vibration Sample Magnetometer

- Maxmagnetic field: 10 (kOe)
- Time constant lock-in amp: 100 (msec)
- Measuring method: sweep {speed 1: 5 sec/1 kOe, speed 2: 10 sec/1 kOe (1to -1 [kOe])}
- Angle: fix 0 [°]
- Gap of pole chips: 14 mm
- Measuring loop: half

The magnetization was calculated from the obtained hysteresis loop in the following manner: Magnetization (emu/g) = {M(10)-2{M10)-M(5)}}/weight of alloy measured where, M(10) represents the magnetization when the X-axis is 10 [kOe], and M(5) represents the magnetization when the X-axis is 5 [kOe].

Amount of Increase in Specific Surface Area (ΔCS) × Magnetization after Alkaline Treatment

For the hydrogen storage alloy powder, the value of the product of the "amount of increase in specific surface area ΔCS" and the "magnetization after alkaline treatment", which were obtained as described above, was calculated.

Degradation of battery life characteristics is caused by an increase in specific surface area due to cracking of hydrogen storage alloy particles caused by repeated charging and discharging, as well as corrosion from the surface of the alloy. Since the battery characteristics are degraded as a result of cracking of particles and corrosion progressing simultaneously, the value of the product of the amount of increase in specific surface area ΔCS and the magnetization after alkaline treatment was used as a battery life evaluation method in which the synergistic effects of cracking of particles and corrosion are evaluated. If the value of "amount of increase in specific surface area ΔCS × magnetization after alkaline treatment" is low, it can be evaluated that degradation of battery life characteristics is unlikely to occur.

**Table 1**

| | Alloy components | | | | | | | | Mole ratios of elements with respect to 1 mol of Mm | | | | | | | |
|---|---|---|---|---|---|---|---|---|---|---|---|---|---|---|---|---|
| | La (wt%) | Ce (wt%) | Mm (wt%) | Ce/Mm×100 (%) | Ni (wt%) | Mn (wt%) | Al (wt%) | Co (wt%) | Mm | Ni (a) | Mn (b) | Al (c) | Co (d) | d/b | c/b | a+b+c+d |
| Ex. 1 | 25.85 | 5.89 | 31.75 | 18.6 | 59.43 | 5.38 | 2.13 | 1.29 | 1.00 | 4.44 | 0.43 | 0.35 | 0.10 | 0.22 | 0.81 | 5.310 |
| Ex. 2 | 25.83 | 5.77 | 31.60 | 18.3 | 59.43 | 5.93 | 2.04 | 0.98 | 1.00 | 4.46 | 0.48 | 0.33 | 0.07 | 0.15 | 0.70 | 5.340 |
| Ex. 3 | 25.53 | 5.74 | 31.27 | 18.3 | 59.32 | 7.40 | 1.35 | 0.66 | 1.00 | 4.50 | 0.60 | 0.22 | 0.05 | 0.08 | 0.37 | 5.369 |
| Ex. 4 | 25.65 | 5.78 | 31.44 | 18.4 | 60.02 | 5.86 | 2.06 | 0.60 | 1.00 | 4.53 | 0.47 | 0.34 | 0.04 | 0.10 | 0.71 | 5.381 |
| Ex. 5 | 25.91 | 5.85 | 31.76 | 18.4 | 58.30 | 6.35 | 1.63 | 1.94 | 1.00 | 4.35 | 0.51 | 0.27 | 0.14 | 0.28 | 0.52 | 5.268 |
| Ex. 6 | 25.73 | 5.86 | 31.59 | 18.5 | 60.16 | 6.18 | 2.04 | 0.00 | 1.00 | 4.51 | 0.50 | 0.33 | 0.00 | 0.00 | 0.67 | 5.346 |
| Ex. 7 | 26.03 | 5.90 | 31.93 | 18.5 | 59.13 | 5.45 | 2.16 | 1.30 | 1.00 | 4.39 | 0.43 | 0.35 | 0.10 | 0.22 | 0.81 | 5.268 |
| Ex. 8 | 25.93 | 5.87 | 31.82 | 18.5 | 59.08 | 5.96 | 1.84 | 1.28 | 1.00 | 4.40 | 0.47 | 0.30 | 0.10 | 0.20 | 0.63 | 5.272 |
| Ex. 9 | 25.89 | 5.88 | 31.78 | 18.5 | 60.29 | 5.37 | 2.19 | 0.34 | 1.00 | 4.50 | 0.43 | 0.35 | 0.03 | 0.06 | 0.83 | 5.308 |
| Ex. 10 | 25.71 | 5.78 | 31.49 | 18.3 | 59.74 | 6.07 | 2.04 | 0.67 | 1.00 | 4.50 | 0.49 | 0.33 | 0.05 | 0.10 | 0.68 | 5.369 |
| Com. Ex. 1 | 25.97 | 5.74 | 31.74 | 18.1 | 58.40 | 5.03 | 2.14 | 2.66 | 1.00 | 4.36 | 0.40 | 0.35 | 0.20 | 0.49 | 0.87 | 5.312 |
| Com. Ex. 2 | 25.45 | 5.70 | 31.15 | 18.3 | 59.94 | 5.92 | 1.96 | 1.00 | 1.00 | 4.56 | 0.48 | 0.32 | 0.08 | 0.16 | 0.68 | 5.444 |
| Com. Ex. 3 | 25.66 | 5.81 | 31.49 | 18.5 | 60.09 | 4.59 | 1.85 | 1.98 | 1.00 | 4.52 | 0.37 | 0.30 | 0.15 | 0.40 | 0.82 | 5.344 |
| Com. Ex. 4 | 25.07 | 5.65 | 30.73 | 18.4 | 64.62 | 2.44 | 0.91 | 1.28 | 1.00 | 4.98 | 0.20 | 0.15 | 0.10 | 0.49 | 0.76 | 5.438 |
| Com. Ex. 5 | 25.66 | 5.74 | 31.41 | 18.3 | 59.64 | 5.95 | 1.96 | 1.01 | 1.00 | 4.50 | 0.48 | 0.32 | 0.08 | 0.16 | 0.67 | 5.380 |

**Table 2**

| | Alloy properties | | | | | | |
|---|---|---|---|---|---|---|---|
| | Hardness H [GPa] | Composite elastic modulus E [GPa] | H/E [-] | a-Axis length (Å) | c-Axis length (Å) | c/a | Segregated phase percentage (%) |
| Ex. 1 | 5.8 | 44.6 | 0.130 | 5.0177 | 4.0627 | 0.8097 | 0.35 |
| Ex. 2 | 6.7 | 73.4 | 0.091 | 5.0177 | 4.0646 | 0.8101 | 1.04 |
| Ex. 3 | 10.9 | 135.6 | 0.080 | 5.0187 | 4.0680 | 0.8106 | 0.19 |
| Ex. 4 | 6.6 | 63.6 | 0.104 | 5.0148 | 4.0652 | 0.8106 | 0.81 |
| Ex. 5 | 6.0 | 46.1 | 0.130 | 5.0177 | 4.0633 | 0.8098 | 0.58 |
| Ex. 6 | 6.6 | 72.5 | 0.091 | 5.0149 | 4.0673 | 0.8110 | 0.08 |
| Ex. 7 | 10.1 | 74.1 | 0.136 | 5.0205 | 4.0630 | 0.8093 | 0.32 |
| Ex. 8 | 10.8 | 79.6 | 0.136 | 5.0188 | 4.0626 | 0.8095 | 0.41 |
| Ex. 9 | 10.9 | 127.5 | 0.086 | 5.0188 | 4.0618 | 0.8093 | 0.79 |
| Ex. 10 | 9.6 | 67.4 | 0.143 | 5.0175 | 4.0683 | 0.8108 | 0.06 |
| Com. Ex. 1 | 7.6 | 95.6 | 0.079 | 5.0195 | 4.0609 | 0.8090 | 0.62 |
| Com. Ex. 2 | 11.1 | 106.3 | 0.104 | 5.0116 | 4.0646 | 0.8110 | 1.46 |
| Com. Ex. 3 | 8.6 | 110.2 | 0.078 | 5.0102 | 4.0556 | 0.8095 | 3.76 |
| Com. Ex. 4 | 19.2 | 199.8 | 0.096 | 4.0996 | 4.0237 | 0.9815 | 1.56 |
| Com. Ex. 5 | 15.0 | 166.3 | 0.090 | 5.0229 | 4.0548 | 0.8073 | 2.44 |

**Table 3**

| | Pulverization residual rate index Ex. 1 = 100% (%) | ΔCS (m²/cc) | Magnetization after alkaline treatment (emu/g) | ΔCS × Magnetization after alkaline treatment [(emu□m²)/(g□cc)] |
|---|---|---|---|---|
| Ex. 1 | 100 | 0.14 | 1.580 | 0.227 |
| Ex. 2 | 98 | 0.14 | 1.420 | 0.202 |
| Ex. 3 | 91 | 0.16 | 1.410 | 0.224 |
| Ex. 4 | 104 | 0.13 | 1.413 | 0.178 |
| Ex. 5 | 109 | 0.11 | 1.460 | 0.161 |
| Ex. 6 | 106 | 0.12 | 1.199 | 0.145 |
| Ex. 7 | 91 | 0.18 | 1.398 | 0.251 |
| Ex. 8 | 93 | 0.17 | 1.506 | 0.249 |
| Ex. 9 | 78 | 0.22 | 1.474 | 0.326 |
| Ex. 10 | 102 | 0.12 | 1.234 | 0.150 |
| Com. Ex. 1 | 117 | 0.10 | 1.494 | 0.149 |
| Com. Ex. 2 | 122 | 0.09 | 1.297 | 0.118 |
| Com. Ex. 3 | 128 | 0.09 | 1.477 | 0.127 |
| Com. Ex. 4 | 69 | 0.26 | 2.207 | 0.584 |
| Com. Ex. 5 | 69 | 0.27 | 1.532 | 0.416 |

It can be clearly seen from the results shown in Table 3 that the hydrogen storage alloys obtained in the examples had small pulverization residual rate indices and low values of "amount of increase in specific surface area (ΔCS) × magnetization after alkaline treatment". That is to say, it can be seen that the hydrogen storage alloys obtained in the examples achieved a good balance between the life characteristics and the output characteristics. In particular, the hydrogen storage alloys of Examples 1 to 3 achieved a much better balance between the life characteristics and the output characteristics than those of the other examples. In contrast, it can be seen that the hydrogen storage alloys obtained in the comparative examples had good life characteristics but poor output characteristics, or good output characteristics but poor life characteristics.

### Industrial Applicability

As described in detail above, according to the present invention, a hydrogen storage alloy that have sufficient life characteristics and output characteristics while reducing the amount of Co used is provided.

## Claims

1. A hydrogen storage alloy comprising Mm (Mm represents a misch metal), Ni, Mn, Al, and Co and having a main phase that has a CaCus-type crystal structure,
wherein La and Ce together account for 95 mass% or more of Mm,
d is 0.00 or more and less than 0.15,
d/b is 0.00 or more and 0.35 or less, and
a sum of a+b+c+d is 5.22 or more and 5.44 or less, and
a ratio H/E of hardness H (GPa) to composite elastic modulus E (GPa) as measured using a nanoindentation technique is 0.08 or more and 0.15 or less,
wherein a represents a molar ratio of Ni with respect to 1 mol of Mm
b represents a molar ratio of Mn with respect to 1 mol of Mm,
c represents a molar ratio of Al with respect to 1 mol of Mm, and
d represents a molar ratio of Co with respect to 1 mol of Mm.

2. The hydrogen storage alloy according to claim 1, wherein the hardness H is 1 GPa or more and 11 GPa or less.

3. The hydrogen storage alloy according to claim 1, wherein a ratio of c-axis length to a-axis length of the CaCus-type crystal structure is 0.8080 or more and 0.8110 or less.

4. The hydrogen storage alloy according to claim 1, wherein c/b is 0.30 or more and 0.85 or less.

5. The hydrogen storage alloy according to claim 1, wherein a ratio of an area of a segregated phase to an area of a cross section of the hydrogen storage alloy is 0.01% or more and 1.60% or less, the cross section of the hydrogen storage alloy being observed using a scanning electron microscope.
